# EUROPÄISCHE PATENTSCHRIFT

(11) **EP 2 502 763 B1**
(45) Veröffentlichungstag und Bekanntmachung des Hinweises auf die Patenterteilung: **10.05.2017**
(21) Anmeldenummer: 12001999.7
(22) Anmeldetag: 21.03.2012
(51) Int. Cl.: B60D 1/54, B60D 1/26, B60D 1/52, B60D 1/24, B60R 9/06, B60R 9/04

(54) **Anhängekupplung**
Tow bar
Attelage

(30) Priorität: 23.03.2011 DE 102011014882
(43) Veröffentlichungstag der Anmeldung: 26.09.2012
(73) Patentinhaber: WESTFALIA - Automotive GmbH, 33378 Rheda-Wiedenbrück (DE)
(72) Erfinder: Sielhorst, Bernhard, 33378 Rheda-Wiedenbrück (DE); Peitz, Jürgen, 33378 Rheda-Wiedenbrück (DE); Vahle, Dirk, 59320 Ennigerloh (DE); Kleinhans, Björn, 33442 Herzebrock-Clarholz (DE); Roolf, Thorsten, 31542 Bad Nenndorf (DE)
(74) Vertreter: Patentanwälte Bregenzer und Reule Partnerschaftsgesellschaft mbB

(56) Entgegenhaltungen:
- DE-A1- 10 231 963
- DE-A1- 10 347 817
- DE-A1- 19 826 618
- DE-A1-102006 043 430
- US-A- 4 297 069
- US-A- 5 331 722
- US-A1- 2008 149 420
- US-B1- 6 769 858

## Beschreibung

Die Erfindung betrifft eine Anhängekupplung für ein Kraftfahrzeug, mit einem Kupplungsarm, an dessen freiem Ende ein Kupplungselement zum Ankuppeln eines Anhängers angeordnet ist, gemäß dem Oberbegriff des Anspruchs 1.

Eine derartige Anhängekupplung ist z.B. in DE 103 47 817 A1 beschrieben.

Ein Antrieb einer Anhängekupplung, beispielsweise ein Antrieb für eine Fixiereinrichtung der Anhängekupplung oder ein Antrieb zum Verstellen des Kupplungsarms zwischen einer Gebrauchsstellung und einer Nichtgebrauchsstellung sind an sich bekannt. Beispielsweise kann eine Fixiereinrichtung einer Anhängekupplung, die in DE 20 2004 010 273 U1 beschrieben ist, mit einem flexiblen Zugorgan in Gestalt eines Bowdenzugs entriegelt werden. Das Zugorgan ist also quasi die Seele des Bowdenzugs, d.h. es ist ein zusätzlicher, das Zugorgan umgebender Mantel erforderlich. Bei der Montage wird der Bowdenzug eingestellt, so dass eine optimale Zugkraftübertragung möglich ist. Nur so kann sichergestellt werden, dass die Anhängekupplung sicher und exakt entriegelt werden kann. Der Montageaufwand ist erheblich. Zudem kann es erforderlich sein, nach einer gewissen Betriebsdauer den Bowdenzug neu einzustellen, damit er zuverlässig funktioniert.

Es ist daher die Aufgabe der vorliegenden Erfindung, eine Anhängekupplung mit einem einfachen, zuverlässigen Antriebskonzept zu deren Fixierung und/oder zum Verstellen des Kupplungsarms bereitzustellen.

Ein weiterer Aspekt der Erfindung ist es, einen solchen Antrieb als separate Baueinheit bereitzustellen, der an einer Fixiereinrichtung einer Anhängekupplung nachträglich montierbar ist und/oder der zum nachträglichen Ausrüsten einer Anhängekupplung mit einem Stellantrieb, zum Beispiel zum Verstellen des Kupplungsarms in die Gebrauchsstellung und/oder die Nichtgebrauchsstellung geeignet ist.

Zur Lösung der Aufgabe ist eine Anhängekupplung gemäß der technischen Lehre des Anspruchs 1 vorgesehen.

Ein weiterer Aspekt der Erfindung sieht vor, einen Antrieb als separate Baueinheit zur Verwendung an einer Anhängekupplung, insbesondere deren Fixiereinrichtung, vorzusehen.

Der Längenausgleich im Sinne der Erfindung kann beispielsweise durch eine oder mehrere Federn gewährleistet werden, die beispielsweise am Zugorgan selbst, an einer Motoreinheit oder Handbetätigungseinheit, am angetriebenen Objekt, insbesondere dem Antriebskörper oder dergleichen, vorgesehen ist.

Auch einer oder mehrere dehnbare, also längsflexible oder längenverstellbare Abschnitte des mindestens einen Zugorgans sind möglich. Beispielsweise könnte ein an sich zugfestes Zugorgan vorgesehen sein, beispielsweise ein Stahlseil, ein Seil aus Karbonfasern, Textilfasern oder dergleichen. Das an sich zugfeste Zugorgan weist zusätzlich mindestens einen längenflexiblen Abschnitt, beispielsweise aus einem flexiblen Kunststoff, Gummi oder dergleichen, auf, der einen Bestandteil der Längenausgleichseinrichtung bildet.

Ein weiterer Aspekt der Erfindung ist es, dass der mit dem Zugorgan verbundene, an sich um eine Drehachse drehbare Antriebskörper, einen zusätzlichen Bewegungsfreiheitgrad aufweist, beispielsweise längs der Drehachse verschieblich, quer zur Drehachse verschieblich, zusätzlich quer zur Drehachse drehbar oder dergleichen, ist. Der Handgriffkörper ist also nicht nur um die Drehachse drehbar, sondern hat eine weitere Bewegungsmöglichkeit. Das flexible Konzept der Erfindung sieht dabei vor, dass beispielsweise durch die Längenausgleichseinrichtung, aber auch beispielsweise durch ein synchrones belegen eines zweiten, mit dem Zugorgan verbundenen Objekts, zum Beispiel einem Wickelkörper, diese zusätzliche Bewegungsfreiheit möglich ist.

Ein weiterer Aspekt der Erfindung sieht vor, dass eine Fixiereinrichtung durch einen Antrieb im Sinne der Erfindung antreibbar ist. Diese Fixiereinrichtung kann beispielsweise im Zusammenhang mit einem bezüglich des Fahrzeughalters beweglich gelagerten Kupplungsarm zum Einsatz kommen, der selbstverständlich auch durch einen erfindungsgemäßen Antrieb angetrieben werden kann, aber auch beispielsweise bei einem Kupplungsarm, der vom Fahrzeughalter entfernbar ist. Beispielsweise kann der Kupplungsarm an den Fahrzeughalter angesteckt oder in den Fahrzeughalter eingesteckt und mittels der erfindungsgemäß angetriebenen Fixiereinrichtung fixiert oder verriegelt werden. Die Längenausgleichseinrichtung ermöglicht eine günstige Anordnung des Antriebs bezüglich der Fixiereinrichtung. Auch bei der Fixiereinrichtung kann vorgesehen sein, dass der erfindungsgemäße Antrieb bidirektional oder unidirektional arbeitet. Beispielsweise könnte der Antrieb zum Entriegeln der Fixiereinrichtung ausgestaltet sein, während zum Verriegeln eine Federanordnung vorgesehen ist.

Unter einem Antriebskörper im Sinne der Erfindung wird ein mit dem Zugorgan betätigbarer, angetriebener oder antreibender Körper verstanden. So kann der Antriebskörper also durch das Zugorgan angetrieben werden, so dass er im eigentlichen Sinne des Wortes ein "Antriebskörper" ist. Es ist auch möglich, dass der Antriebskörper einen Abtrieb bildet, so dass man ihn auch als Abtriebskörper zu bezeichnen könnte. Im Sinne einer Vereinfachung der Beschreibung wird nachfolgend jedoch von einem Antriebskörper gesprochen.

Es versteht sich, dass ein einziges Zugorgan vorgesehen sein kann. Weiterhin kann auch ein Zugorgan vorgesehen sein, das mit zwei voneinander verschiedenen Trumen mit dem angetriebenen Objekt, beispielsweise den Kupplungsarm oder einem Wickelkörper oder dergleichen, verbunden ist, um eine bidirektionale Bewegung, d.h. in entgegengesetzten Bewegungsrichtungen, zu ermöglichen. Selbstverständlich können auch für jede Bewegungsrichtung ein separater Antrieb im Sinne der Erfindung und/oder ein separates Zugorgan vorgesehen sein. Weiterhin ist es denkbar, dass der erfindungsgemäße Antrieb unidirektional wirkt, beispielsweise entgegen der Kraft einer Rückstell-Federanordnung oder dergleichen.

Erfindungsgemäß ist eine Feder der Federanordnung an einem Längsendbereich des mindestens einen Zugorgans oder einem Anschlagbereich des mindestens einen Zugorgans angeordnet, mit dem das mindestens eine Zugorgan an einem Gegenanschlag anschlägt.

Die Längenausgleichseinrichtung umfasst zweckmäßigerweise mindestens einen mit dem mindestens einen Zugorgan fest verbundenen Zugorgan-Anschlag und einen mit einem antreibenden oder angetriebenen Körper verbundenen Antrieb-Anschlag. Der Antrieb-Anschlag ist beispielsweise an dem Antriebskörper, einem Wickelkörper oder dergleichen angeordnet. Der Zugorgan-Anschlag ist durch eine auf das mindestens eine Zugorgan wirkende Zugkraft zu dem Antrieb-Anschlag hin bewegbar. Zwischen dem Zugorgan-Anschlag und dem Antrieb-Anschlag ist eine Feder angeordnet, welche die Anschläge voneinander weg beaufschlagt. Wenn also das Zugorgan gezogen wird, wird der Zugorgan-Anschlag gegen die Kraft der Feder, die ein Längenspiel also aus diesem Wege ausgleichen kann, zum Antrieb-Anschlag hin bewegt. Wenn die Zugkraft nachlässt, kommt die Feder zum Einsatz und bewegt den Zugorgan-Anschlag vom Antrieb-Anschlag weg, wobei dabei ein Längenspiel des Zugorgans ausgeglichen wird. Somit hält also die Feder das Zugorgan gespannt.

Die oben beschriebene Anordnung kann beispielsweise an einem Längsendbereich des Zugorgans angeordnet sein. Es ist aber auch ein durchgehendes Zugorgan denkbar, bei dem folgende Maßnahme zweckmäßig ist:
Die Längenausgleichseinrichtung weist vorteilhaft mindestens zwei Zugorgan-Anschläge auf, zwischen denen sich ein Abschnitt des mindestens einen Zugorgans erstreckt, wobei die Zugorgan-Anschläge zwischen Antrieb-Anschlägen und zwischen mindestens einem Zugorgan-Anschlag und dem ihm zugeordneten Antrieb-Anschlag eine Feder angeordnet sind. Durch abwechselnde Zugkraft-Beaufschlagung des mindestens einen Zugorgans in einander entgegengesetzten Zugrichtungen schlägt der eine Zugorgan-Anschlag gegen den ihm zugeordneten Antrieb-Anschlag an, bei entgegengesetzter Zugkraft schlägt der andere Zugorgan-Anschlag an dem ihm zugeordneten Antrieb-Anschlag an. Die beiden Zugorgan-Anschläge können beispielsweise zwischen den Antrieb-Anschlägen angeordnet sein. Zwischen den beiden Zugorgan-Anschlägen kann ein durchgehender Abschnitt des Zugorgans vorgesehen sein.

Selbstverständlich ist das erfindungsgemäße Konzept sowohl bei motorischen, als auch bei manuellen Antrieben anwendbar. So kann der Antrieb beispielsweise einen Antriebsmotor, zum Beispiel einen Elektromotor, einen Druckluftmotor, Fluid-Motor oder dergleichen enthalten. Aber auch ein manueller Antrieb mit einem Handbetätigungselement, zum Beispiel einer Kurbel, einem Drehknopf oder dergleichen, mit dem das Zugorgan betätigbar ist, ist möglich. Weiterhin kann auch ein motorischer Antrieb vorgesehen sein, der zumindest hilfsweise manuell betätigbar ist, zum Beispiel als Notbetätigung.

Der Antrieb kann einen Drehantrieb umfassen, mit dem beispielsweise das Zugorgan auf aufwickelbar oder abwickelbar ist. Aber auch eine lineare Funktion des Antriebs ist möglich, um das Zugorgan zu ziehen. So kann beispielsweise ein elektrischer oder pneumatischer Linearmotor bei dem erfindungsgemäßen Antrieb vorgesehen sein.

Der Antrieb umfasst zweckmäßigerweise mindestens einen Wickelkörper zum Aufwickeln des mindestens einen Zugorgans. Der Wickelkörper kann beispielsweise den Antriebskörper bilden oder auch der Antriebskörper kann als ein Wickelkörper ausgestaltet sein. Weiterhin ist es möglich, dass der Wickelkörper an dem Antriebskörper angeordnet ist, insbesondere fest mit demselben verbunden ist.

Der mindestens eine Wickelkörper ist zweckmäßigerweise durch die Federanordnung oder einen Bestandteil der Federanordnung der Längenausgleichseinrichtung im Sinne eines Spannens des mindestens einen Zugorgans belastet. Beispielsweise kann eine Torsionsfeder vorgesehen sein, die den Wickelkörper im Sinne eines Spannens belastet. Es ist aber auch möglich, dass die Federanordnung den Wickelkörper quer zu seiner Wickelachse oder Drehachse belastet, um das Längenspiel des mindestens einen Zugorgans auszugleichen, so dass dieses vorteilhafter Weise stets gespannt bleibt.

Der mindestens eine Wickelkörper kann zum Längenausgleich des mindestens einen Zugorgans beweglich, z.B. schwenkbar, gelagert sein.

Der mindestens eine Wickelkörper oder einer der Wickelkörper kann mit dem Kupplungsarm fest, aber auch mit einem Drehspiel, insbesondere mit Schlupf, verbunden sein. Somit macht also der Wickelkörper eine Verstellbewegung des Kupplungsarms zwischen der Gebrauchsstellung unter Nichtgebrauchsstellung zumindest teilweise mit. Umgekehrt formuliert gemacht auch der Kupplungsarm eine Dreh- und Schwenkbewegung bzw. eine Wickelbewegung des Wickelkörpers mit. Wenn also das Zugorgan von dem Wickelkörper abgewickelt wird und der Wickelkörper dabei dreht, dreht der Kupplungsarm mit.

Vorzugsweise ist der Wickelkörper oder mindestens einer der Wickelkörper mit dem Antriebsmotor verbunden, beispielsweise auf einem Abtrieb des Antriebsmotors angeordnet oder mit diesem drehfest verbunden. Zweckmäßigerweise ist dann vorgesehen, dass der Wickelkörper und der Antriebsmotor in einem gemeinsamen Schutzgehäuse angeordnet sind.

Der Kupplungsarm kann beispielsweise mithilfe des fahrzeugseitigen Fahrzeughalters oder Lagers um eine Drehachse drehbar oder schwenkbar sein und entlang dieser Dreh- oder Schwenkachse verschieblich gelagert sein. Es ist auch möglich, dass der Kupplungsarm am Fahrzeughalter oder Lager um mindestens zwei, vorzugsweise drei Drehachsen oder Schwenkachsen schwenkbar ist. Selbstverständlich kann auch bei zwei oder mehr Drehachsen mindestens ein zusätzlicher Schiebe-Bewegungsfreiheitgrad des Kupplungsarms bezüglich des Fahrzeughalters oder Lagers vorhanden sein. Beispielsweise umfasst der Fahrzeughalter ein Kugellager, eine kardanische Aufhängung oder dergleichen, um den Kupplungsarm bezüglich des Kraftfahrzeugs mehrachsig zu lagern.

Der Kupplungsarm ist an dem Fahrzeughalter zweckmäßigerweise durch eine Zwangsführung bei seiner Bewegung zwischen der Gebrauchsstellung und der Nichtgebrauchsstellung geführt. Die Zwangsführung umfasst beispielsweise eine Kulissenführung, eine oder mehrere Schrägflächen, Nockenflächen oder dergleichen. Bevorzugt ist dabei vorgesehen, dass die Zwangsführung die Bewegung des Kupplungsarms vorgibt, wobei der Kupplungsarm dann das mindestens eine Zugorgan mitnimmt und quasi dem Zugorgan seine Bewegung vorgibt. Gerade dann kommt die erfindungsgemäße Längenausgleichseinrichtung vorteilhaft zum Tragen, da sie auch bei komplexen Bewegungen des Zugorgans dafür sorgt, dass das Zugorgan straff bleibt.

Das mindestens eine Zugorgan umfasst beispielsweise ein Seil. Das Seil kann beispielsweise aus Stahl, Karbonfasern, Textilfasern oder dergleichen anderem biegeflexiblem, jedoch zugfestem Material sein. Eine bevorzugte Ausführungsform der Erfindung sieht vor, dass das Zugorgan ohne eine separate Schutzhülle oder Stützhülle ausgestaltet ist, die beispielsweise bei einem Bowdenzug erforderlich ist. Das Zugorgan ist also sozusagen hüllenlos.

Selbstverständlich kann das Zugorgan aber auch mit einer Schutzhülle oder Stützhülle ausgestattet sein, beispielsweise einen Bowdenzug bilden.

Eine weitere Ausführungsform sieht vor, dass das biegeflexible, jedoch im Wesentlichen zugfestes Zugorgan einen Zahnriemen oder einen sonstigen Riemen, also auch ohne eine Zahnung, umfasst. Der Riemen kann z.B. aus Kunststoff oder Gummi sein.

Der erfindungsgemäße Antrieb ist in einer bevorzugten, in der Zeichnung noch näher beschriebenen Ausführungsform zum Verstellen des Kupplungsarm zwischen der Gebrauchsstellung und der Nichtgebrauchsstellung, zumindest in einer der beiden Richtungen, vorgesehen. Weiterhin ist ein zusätzlicher Stellantrieb zum Verstellen der Fixiereinrichtung in eine den Kupplungsarm zu einer Verstellung gegenüber dem Fahrzeughalter freigegebenden Lösestellung und/oder in eine den Kupplungsarm am Fahrzeughalter fixierenden Fixierstellung vorhanden. Vorteilhaft ist bei dieser Konstellation eine Steuerung vorgesehen, die den Antrieb für den Kupplungsarm in Abhängigkeit von einer Stellung der Fixiereinrichtung ansteuert. Wenn also die Fixiereinrichtung die Fixierstellung einnimmt, ist der Antrieb für den Kupplungsarm nicht betätigbar. Beispielsweise können der Stellantrieb und/oder die Fixiereinrichtung einen Sensor zur Abtastung der Stellung des Stellantriebs bzw. der Fixiereinrichtung aufweisen. Wenn also beispielsweise ein Verriegelungsglied oder Fixierglied der Fixiereinrichtung die Lösestellung einnimmt, kann der erfindungsgemäße Antrieb zum Verstellen des Kupplungsarms arbeiten, ansonsten nicht.

Eine weitere vorteilhafte Maßnahme sieht vor, dass beispielsweise das Zugorgan und/oder ein Wickelkörper und/oder der Antriebskörper zumindest in denjenigen Bereich, wo das Zugorgan zweckmäßigerweise am Wickelkörper gleiten sollte, beispielsweise dort, wo eine erfindungsgemäße Längenausgleichseinrichtung angeordnet ist, mit einer Gleitbeschichtung versehen ist. Somit kann das von der Längenausgleichseinrichtung gespannte Zugorgan leichter am Wickelkörper oder auch am Antriebskörper entlang gleiten.

Das erfindungsgemäße Konzept kann selbstverständlich auch bei Lastenträgern, wie beispielsweise in der Art einer Schublade oder eines Schlittens aus einem Heck eines Kraftfahrzeugs ausziehbar sind, verwendet werden. Beispielsweise kann mit einem erfindungsgemäß mit einer Längenausgleichseinrichtung versehener Antrieb zum Ausziehen des Schlittens aus dem Heck des Kraftfahrzeugs und/oder zum Einfahren des Schlittens in das Heck des Kraftfahrzeugs genutzt werden. Weiterhin ist es denkbar, mit einem solchen Seilzugantrieb oder Riemenantrieb oder ein sonstiges flexibles Zugorgan aufweisenden Antrieb beispielsweise ein Anbauteil, zum Beispiel eine Rinne zum Abstellen eines Fahrrades, eine Leuchte oder dergleichen, anzutreiben. Auf eine genaue achsparallele Anordnung kommt es dabei nicht an, wenn erfindungsgemäß ein Längenspielausgleich für das Zugorgan vorgesehen ist. Das Anbauteil ist bezüglich einer Basis, z.B. einem Grundgestell, des Lastenträgers vorzugsweise beweglich gelagert.

Ein an sich eigenständiges erfindungsgemäßes Konzept sieht vor, dass ein zu einer Schwenkachse oder Drehachse drehbarer Kupplungsarm mit einem Antrieb versehen wird, der ein flexibles Zugorgan aufweist. Dabei ist der oben vorgeschlagene Spielausgleich oder Längenspielausgleich für das mindestens eine Zugorgan zwar zweckmäßig, jedoch nicht notwendig.

Weiterhin ist es denkbar, dass ein Antrieb mehrere flexible Zugorgane und/oder mehrere Wickelkörper und/oder mehrere Antriebskörper umfasst.
- Figur 1: eine erfindungsgemäße Anhängekupplung im am Kraftfahrzeug montierten Zustand von schräg hinten, wobei der Kupplungsarm seine Gebrauchsstellung einnimmt,
- Figur 2: die Anhängekupplung gemäß Figur 1 von unten, wobei der Kupplungsarm in Nichtgebrauchsstellung steht,

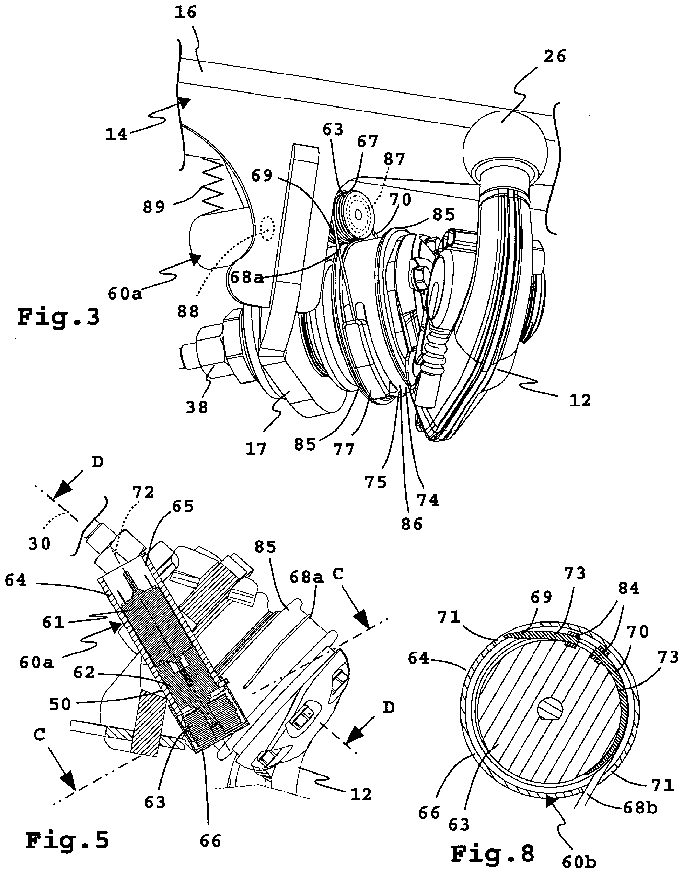

- Figur 3: eine Detailansicht der Anhängekupplung gemäß Figuren 1, 2 von schräg hinten oben,
- Figur 4a: den Kupplungsarm und den Fahrzeughalter der Anhängekupplung gemäß Figuren 1, 2 und 3 ohne einen Antrieb in Gebrauchsstellung,
- Figur 4b: den Kupplungsarm gemäß Figur 4a teilweise in Richtung der Nichtgebrauchsstellung verstellt,
- Figur 4c: den Kupplungsarm gemäß Figur 4a vollständig in die Nichtgebrauchsstellung verstellt,
- Figur 5: eine teilweise geschnittene Ansicht der Anhängekupplung gemäß Figur 1, wobei eine Schnittlinie (etwa entlang einer Linie A-A in Figur 1) durch eine Antriebseinheit hindurch verläuft,

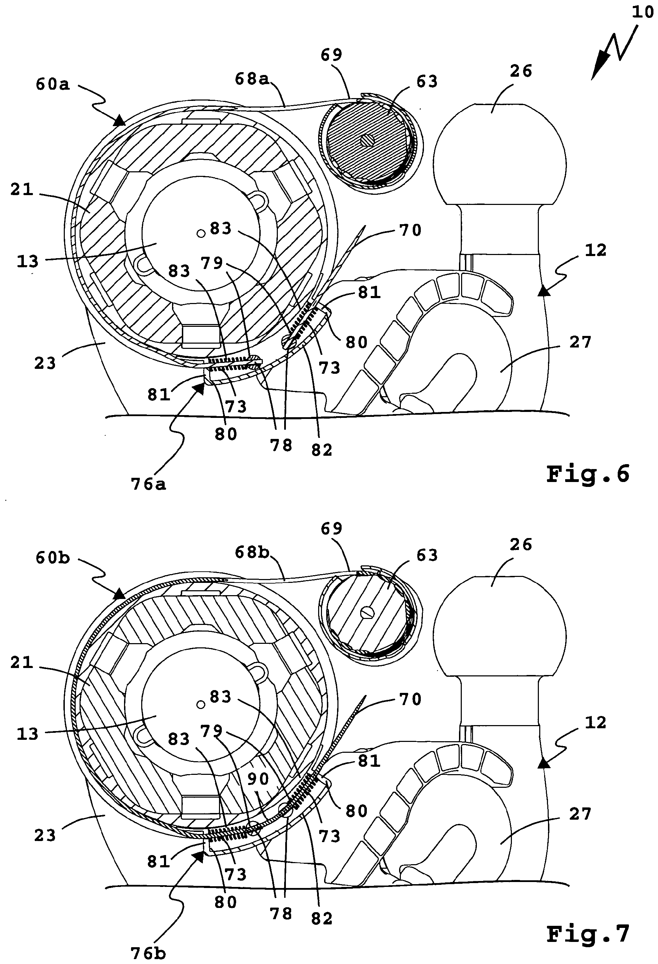

- Figur 6: eine teilweise geschnittene Ansicht der Anhängekupplung gemäß Figur 1, etwa entlang einer Schnittlinie B-B, mit Zugorgan-Anschlägen an jeweiligen Längsenden des Zugorgans,
- Figur 7: eine Variante der Anhängekupplung gemäß Figur 1, etwa entsprechende Ansicht gemäß Figur 6, wobei ein Zugorgan mit 2 Zugorgan-Anschlägen versehen ist, zwischen denen das Zugorgan ohne Unterbrechung verläuft,
- Figur 8: einen Schnitt durch die Antriebseinheit gemäß Figur 5 etwa entlang einer Schnittlinie C-C in Figur 5, wobei das Zugorgan mit seinen Längsenden an einem Wickelkörper festgelegt ist,

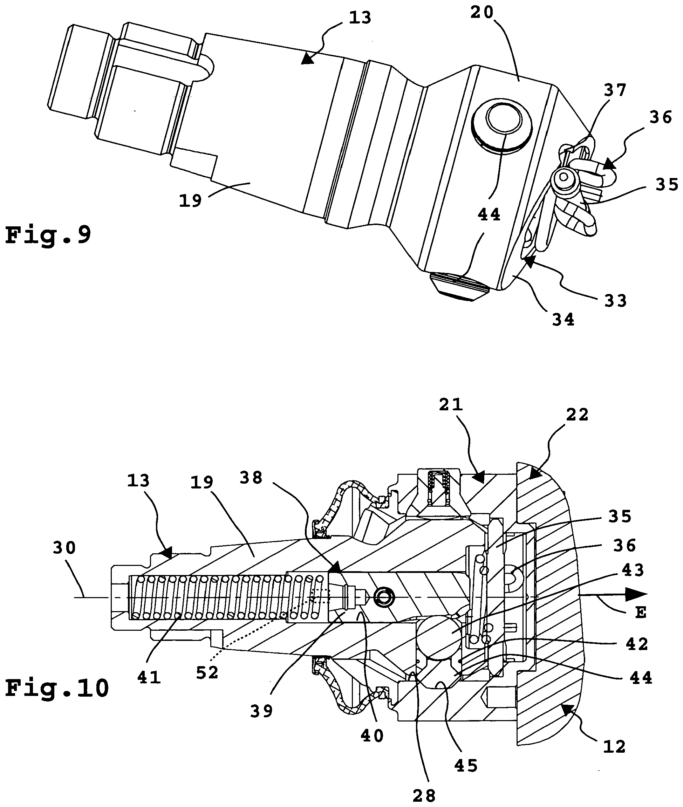

- Figur 9: den Fahrzeughalter der Anhängekupplung gemäß Figur 1, und
- Figur 10: eine Schnittansicht der Anhängekupplung gemäß Figur 5, etwa entlang einer Schnittlinie D-D in Figur 5.

Eine Anhängekupplung 10 umfasst einen Fahrzeughalter 11 sowie einen Kupplungsarm 12, der an dem Fahrzeughalter 11 beweglich gelagert ist. Der Fahrzeughalter 11 umfasst ein Fahrzeug-Lagerteil 13, das mit einer Halterung 14 an einem Kraftfahrzeug 15 befestigt ist, beispielsweise an einem Querträger 16. Die Halterung 14 umfasst beispielsweise ein Flanschelement 17, das von dem Fahrzeug-Lagerteil 13 durchdrungen ist bzw. das Fahrzeug-Lagerteil 13 hält. Das Flanschelement 17 seinerseits ist mittels eines Querträgerhalters 18 am Querträger 16 befestigt. Der Querträgerhalter 18 und/oder das Flanschelement 17 sind beispielsweise plattenartig.

Der Querträger 16 kann selbstverständlich auch einen Bestandteil der Anhängekupplung 10 bilden, so dass diese als Gesamtbauheinheit oder Modul am Kraftfahrzeug 15 befestigbar ist.

Das Fahrzeug-Lagerteil 13 umfasst einen Halteabschnitt 19 sowie einen Lagerabschnitt 20. Der Halteabschnitt 19 ist am Flanschelement 17 bzw. an der Halterung 14 befestigt. Der Lagerabschnitt 20 dient zum beweglichen Lagern des Kupplungsarms 12, der an einem Kupplungsarm-Lagerteil 21 befestigt ist. Das Kupplungsarm-Lagerteil 21 ist beispielsweise in der Art eines Ringes ausgestaltet, an dessen Stirnseite der Kupplungsarm 12 mittels eines insbesondere plattenartigen Befestigungsabschnitt 22 befestigt ist, beispielsweise angeschraubt, angeschweißt oder verklebt. Selbstverständlich ist es in einer alternativen Ausführungsform möglich, dass das Kupplungsarm-Lagerteil einen integralen Bestandteil eines Kupplungsarms bilden kann, beispielsweise einstückig mit diesem ist.

Der Kupplungsarm 12 hat einen gekrümmten oder bogenförmigen Verlauf. Beispielsweise erstreckt sich ein gekrümmter Abschnitt 23 vom Befestigungsabschnitt 22 mit einem gekrümmten Verlauf weg. An den gekrümmten Abschnitt 23 schließt sich ein im Wesentlichen geradlinig verlaufender Abschnitt 24 an, der in einen weiteren gekrümmten, eine Biegung von beispielsweise etwa 90° definierenden Abschnitt 25 übergeht. Oben am Abschnitt 25, das heißt am freien Ende des Kupplungsarms 12, ist ein Kupplungselement 26, beispielsweise eine Kupplungskugel oder ein sonstiges, beispielsweise auch polygonales, Kupplungsstück zum Ankuppeln eines (nicht dargestellten) Anhängers vorgesehen.

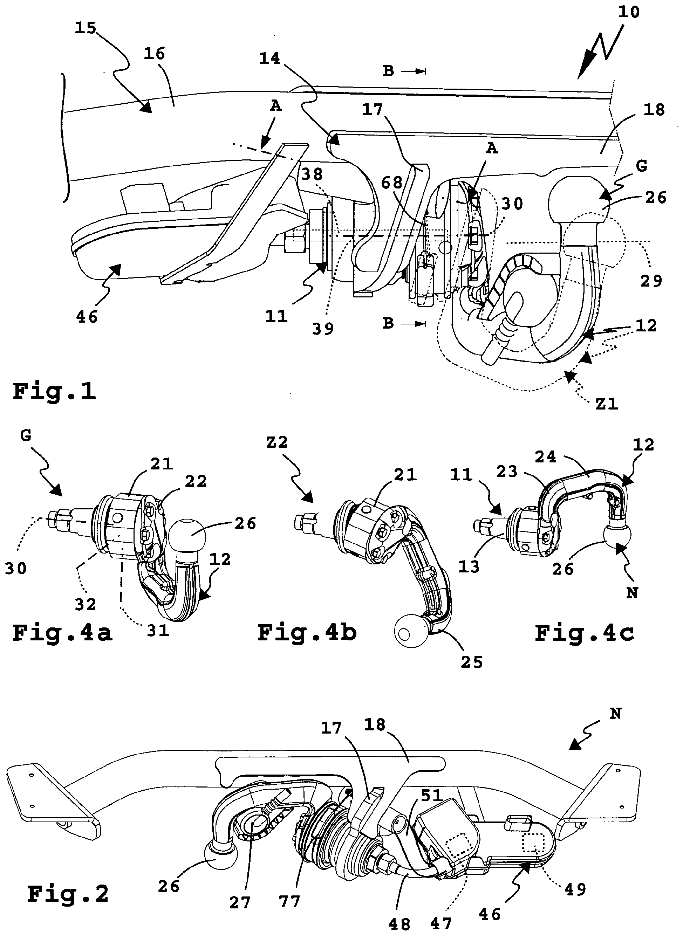

Am Kupplungsarm 12 kann vorzugsweise eine Steckdose 27 angeordnet sein, zum Beispiel oben an den Abschnitten 24, 25. Die Steckdose 27 ist in den Figuren 4a-4c nicht dargestellt.

Im Innern des Kupplungsarm-Lagerteils 21 ist eine Lagerausnehmung 28 vorgesehen, in der der Lagerabschnitt 20 beweglich aufgenommen ist. Der Lagerabschnitt 20 hat eine im Wesentlichen kugelige oder Kugel-ähnliche Gestalt, so dass der Lagerabschnitt 20 in der Lagerausnehmung 28 in der Art eines Kugelgelenkes drehen kann, also eine mehrachsige Drehbarkeit des Kupplungsarms 12 bezüglich des Fahrzeughalters 11 möglich ist. Der Kupplungsarm 12 ist beispielsweise um eine 1. Achse 30 bezüglich des Fahrzeughalters 11 schwenkbar und zudem auch noch längs der Achse 30 beweglich, was nachfolgend noch im Zusammenhang mit der Fixierung bzw. Verriegelung detaillierter beschrieben wird. Weiter kann der Kupplungsarm 12 um eine zweite zur Achse 30 quer verlaufenden Achse 31 und/oder um eine dritte Achse 32, an sich sogar relativ frei im Raum, verschwenkt werden.

Somit können relativ komplexe Bewegungen des Kupplungsarms 12 realisiert werden, so dass dieser mit geringem Abstand unter einem Heck-Stoßfänger 29 des Kraftfahrzeugs 15 vorbei bewegt werden kann, wenn der Kupplungsarm 12 aus seiner Gebrauchsstellung G in seine Nichtgebrauchsstellung N verschwenkt wird. Diese Schwenkbewegung ist in der Zeichnung in einigen Schritten angedeutet, wobei in Figur 1 eine Zwischenposition Z1 und in Figur 4b eine weitere Zwischenposition Z2 dargestellt sind.

Eine Zwangsführung 33 steuert die Bewegung des Kupplungsarms 12 relativ zum Fahrzeughalter 11. Die Zwangsführung 33 umfasst beispielsweise eine am Lagerabschnitt 20, quasi dem Lagerkopf, des Fahrzeug-Lagerteils 13 vorgesehene Führungsfläche 34, an der ein mit dem Kupplungsarm 12 beweglich verbundenes Führungselement 35 geführt ist. Das Führungselement 35 umfasst beispielsweise eine Rolle oder einen Bolzen, der fest oder drehbar im Kupplungsarm-Lagerteil 21 aufgenommen ist, beispielsweise mit seinen Längsendbereichen. Das Führungselement 35 gleitet oder rollt auf der Führungsfläche 34 ab und gibt so dem Kupplungsarm 12 seine Relativbewegung zum Fahrzeughalter 11 vor.

Vorzugsweise ist noch optional eine Stell-Federanordnung 36 vorgesehen, die sich einerseits am Fahrzeug-Lagerteil 13, andererseits am Kupplungsarm-Lagerteil 21 abstützt. Die Stell-Federanordnung 36 beaufschlagt den Kupplungsarm 12 beispielsweise in Richtung der Nichtgebrauchsstellung N oder der Gebrauchsstellung G oder auch in eine dazwischen liegende Zwischenposition, beispielsweise die untere Zwischenposition Z2.

An dem Lagerabschnitt 20, etwa im Bereich der Führungsfläche 34, ist eine Fixier-Vertiefung 37 angeordnet, in die das Führungselement 35 in einer Fixierstellung des Kupplungsarms 12 relativ zum Fahrzeughalter 11 eingreift. Die Fixier-Vertiefung 37 bildet einen Bestandteil einer Fixiereinrichtung 38, die ein axiales Verschieben des Kupplungsarms 12 relativ zum Fahrzeughalter 11 zumindest bei einer Verriegelungsbewegung oder Fixierbewegung bzw. entgegengesetzt derselben vorsieht.

Die Fixiereinrichtung 38 umfasst einen beispielsweise stangenartigen oder bolzenartigen Verdrängerkörper 39, der entlang einer Schiebeachse, die vorliegend der Achse 30 entspricht, verschieblich in einer Führung 40 des Fahrzeug-Lagerteils 13 aufgenommen ist. Eine Feder 41 belastet den Verdrängerkörper 39 in Richtung einer Verriegelungsstellung oder Fixierstellung, bei der der Verdrängerkörper 39 mit seinem vorderen Ende in Führungen 42 aufgenommene Verdrängerelemente 43 insbesondere nach radial außen verschiebt, die wiederum auf Verriegelungselemente 44 einwirken, so dass diese vor eine Außenoberfläche des Kupplungsarm-Lagerteils 21 vorstehen und in Verriegelungsaufnahmen 45 am Kupplungsarm-Lagerteil 21 im Sinne eines Verriegelns oder Fixierens eingreifen.

Die Fixiereinrichtung 38 verriegelt also selbstständig aufgrund der Feder 41. Zum Entriegeln - das auch manuell erfolgen könnte - ist vorteilhaft ein Stellantrieb 46 vorgesehen, der einen Motor 47 zum Antreiben eines Bowdenzugs 48 aufweist, der mit dem Verdrängerkörper 39 verbunden ist. Der Motor 47 verstellt also zum Lösen der Fixiereinrichtung 38 den Verdrängerkörper 39 über den Bowdenzug 48 entgegen der Kraft der Feder 41 zurück, so dass eine Schrägfläche am vorderen, freien Ende des Verdrängerkörpers 39 von den Verdrängerelementen 43 weg verstellt wird, so dass Verriegelungselemente 44 und die Verdrängerelemente 43 in ihren Führungen 42 nach radial innen, jedenfalls außer Eingriff mit den Verriegelungsaufnahmen 45 gelangen können. Das Kupplungsarm-Lagerteil 21 kann in Richtung eines Pfeils E vom Fahrzeug-Lagerteil 13 ein wenig abgerückt werden, beispielsweise als eine lineare Bewegung, wobei dann auch das Führungselement 35 aus der Fixier-Vertiefung 37 heraus gelangt. Dann kann das Kupplungsarm-Lagerteil 21 relativ zum Lagerabschnitt 20 bewegt und somit der Kupplungsarm 12 verstellt werden.

Die Fixiereinrichtung 38 wird durch eine Steuerung 49 gesteuert. Die Steuerung 49 kann beispielsweise einen lokalen, insbesondere im Gepäckabteil des Kraftfahrzeugs 15 angeordneten Betätigungsschalter aufweisen, mit dem die Anhängekupplung 10 betätigbar ist, beispielsweise die Fixiereinrichtung 38 zum Lösen der Fixierung angesteuert werden kann. Vorzugsweise ist die Steuerung 49 mit einem nicht dargestellten Bordnetz des Kraftfahrzeugs 15 elektrisch verbunden, so dass sie dort von dort beispielsweise Steuersignale erhält.

Die Anhängekupplung 10 ist mittels eines erfindungsgemäßen Antriebes 60a verstellbar, wobei der Antrieb 60a einen Antrieb zum Verstellen des Kupplungsarms 12 aus der Gebrauchsstellung G in die Nichtgebrauchsstellung N und umgekehrt darstellt. Es versteht sich, dass selbstverständlich auch für die Bewegung des Kupplungsarms in einer der beiden Richtungen (in die Gebrauchsstellung G oder die Nichtgebrauchsstellung N, auch eine Rückstell-Federanordnung vorgesehen sein könnte (nicht dargestellt), wobei der Antrieb 60a dann entgegen der Kraft der Rückstell-Federanordnung unidirektional arbeitet.

Der Antrieb 60a ist ein Seilzugantrieb, wobei selbstverständlich auch ein Riemenantrieb, ein Bowdenzug oder dergleichen ohne weiteres möglich sind. Beispielsweise eignet sich ein Bowdenzug für eine schwierige Einbausituation, bei der der Bowdenzug beispielsweise um eine Komponente der Anhängekupplung herum verlegt werden muss, zum Beispiel einen Halter oder Träger. Bei der Anhängekupplung 10 ist jedoch eine unmittelbare Anordnung des Antriebs 60a beim anzutreibenden Objekt, nämlich den Kupplungsarm 12 bzw. dem Kupplungsarm-Lagerteil 21 möglich, was zum einen Platz sparend ist, zum andern auch eine optimale Verlegung des Seilzuges ermöglicht.

Der Antrieb 60a umfasst einen Antriebsmotor 61, beispielsweise einen Elektromotor, der direkt oder vorliegend über ein Getriebe 62 einen Wickelkörper 63 antreibt. Der Antriebsmotor 61, das Getriebe 62 sowie der Wickelkörper 63 sind in einem Schutzgehäuse 64 angeordnet, vorzugsweise gekapselt. Das Schutzgehäuse 64 umfasst einen hülsenartigen Schutzkörper 65, der durch einen als eine Art Kappe ausgestalteten Deckel 66 verschlossen ist.

An dem Wickelkörper 63 sind Führungswindungen 67 zum Führen des Seilzug bzw. des flexiblen Zugorgans 68a angeordnet. Somit wird also das flexible Zugorgan 68a, beispielsweise ein Textilseil, Stahlseil, Karbonfaserseil oder dergleichen, beim Aufwickeln bzw. Abwickeln auf den Wickelkörper 63 geführt und in der jeweilige Führungsvertiefung der Führungswindungen 67 eingeführt. Die Führungswindungen 67 sind beispielsweise schraubenförmig verlaufend am Außenumfang des im Wesentlichen zylindrischen Wickelkörpers 63 angeordnet. Der Antriebsmotor 61 treibt den Wickelkörper 63 an, so dass jeweils ein Trum 69 oder 70 des Zugorgans 68a auf den Wickelkörper 63 auf gewickelt, dass andere Trum 70 oder 69 des Zugorgans 68a vom Wickelkörper 63 abgewickelt wird.

Am Deckel 66 sind Durchtrittsöffnungen 71 vorgesehen, durch die das Zugorgan 68a aus dem Schutzgehäuse 64 heraus bzw. wieder in dieses hinein geführt ist.

Eine Drehachse 72 des Antriebs 60a verläuft zweckmäßigerweise etwa parallel oder wie beim Ausführungsbeispiel in einem kleinen Winkel, beispielsweise etwa 10-30° zur Achse 30. Vorzugsweise ist das im Wesentlichen zylindrische Schutzgehäuse 64 bzw. die Antriebbaugruppe direkt neben dem Fahrzeughalter 11 angeordnet.

Der Antrieb 60a ist bezüglich des Fahrzeughalters 11 ortsfest. Beispielsweise ist der Antrieb 60a mit der Halterung 14 verbunden bzw. wird von dieser gehalten. Die Halterung 14 weist dazu beispielsweise eine Halteöffnung 50 auf.

Der Antrieb 60a ist über eine Leitung 51 mit der Steuerung 49 verbunden. Die Steuerung 49 steuert den Antrieb 60a an. Ein Sensor 52 ist dazu vorgesehen, eine Fixierstellung bzw. eine Lösestellung der Fixiereinrichtung 38 zu ermitteln. Der Sensor 52 ist im Bereich des Verdrängerkörpers 39 angeordnet und erfasst dessen Position. Wenn der Verdrängerkörper 39 eine Lösestellung der Fixiereinrichtung 38 einnimmt, also entgegen der Kraft der Feder 41 von den Verdrängerelementen 43 bzw. Verriegelungselementen 44 weg verstellt ist, meldet der Sensor 52 dies der Steuerung 49, welche den Antriebsmotor 61 dementsprechend zum Verstellen des Kupplungsarms 12 in die Gebrauchsstellung G oder die Nichtgebrauchsstellung N ansteuert. Dabei kann vorzugsweise eine Art alternierender Betrieb vorgesehen sein, bei dem die Steuerung 49 den Antriebsmotor 61 abwechselnd zu einem Rechtslauf und einem Linkslauf ansteuert. Es kann selbstverständlich auch für jede Bewegungsrichtung ein separater Schalteingang bei der Steuerung 49 vorgesehen sein, beispielsweise ein Tastschalter, insbesondere im Gepäckabteil des Kraftfahrzeugs 15.

Bei dem Antrieb 60 ist das Zugorgan 68a im Bereich des Wickelkörpers 63 durchgehend. Es ist um den Wickelkörper 63 als Ganzes geschlungen, insbesondere mit mehreren Windungen, für das der Wickelkörper 63 bei einer Drehbewegung Zugkräfte auf das Zugorgan 68a, abwechselnd auf die Trume 69 oder 70, ausüben kann.

Die freien Längsenden 73 des Zugorgans 68a sind mit einem Antriebskörper 74 zugfest verbunden, allerdings nicht zugfest und steif, sondern mit einem gewissen Spiel. Dieses Spiel ist zweckmäßig, damit das Zugorgan 68a die Bewegungen des Antriebskörpers 74 mitmacht. Der Antriebskörper 74 ist nämlich vorzugsweise drehfest, in einer anderen Ausgestaltung mit einem gewissen Schlupf, jedoch nach Durchlaufen dieses Schlupfes ebenfalls drehfest, mit dem Kupplungsarm-Lagerteil 21 verbunden, so dass durch Ziehen des Zugorgans 68a der Antriebskörper 74 und mit diesem auch der als Kupplungsarm-Lagerteil 21 und letztlich auch der Kupplungsarm 12 verstellbar sind, insbesondere im Wesentlichen drehbar, wobei jedoch aus dem obigen deutlich wird, dass die Drehbewegungen des Kupplungsarms 12 nicht nur um eine, sondern um mehrere Achsen erfolgen. Zudem ist auch noch eine axiale Verschieblichkeit (Pfeil E) bezüglich der Achse 30 vorhanden, beispielsweise wenn die Fixiereinrichtung 38 gelöst wird und eine Zugkraft auf eines der Trume 69 oder 70 ausgeübt wird. Letztlich macht also das Zugorgan 68a die im Grundsatz drehenden, jedoch durchaus komplexen Bewegungen des Kupplungsarm-Lagerteils 21 mit, obwohl der Antrieb 60 bzw. der Antriebsmotor 61 bezüglich der Halterung 14 ortsfest sind.

Man erkennt beispielsweise in Figur 1, dass der Antriebskörper 74 schräg zur Achse 30 eine Kipp-Bewegung durchmacht, die vom Zugorgan 68a mitgemacht wird. Damit dennoch das Zugorgan 68a zumindest im Wesentlichen straff zwischen dem Wickelkörper 63 und dem Antriebskörper 74, der einen 2. Wickelkörper 75 darstellt, geführt ist, ist eine Längenausgleichseinrichtung 76a vorgesehen.

Die Längenausgleichseinrichtung 76a ist am Antriebskörper 74 angeordnet. Die Längenausgleichseinrichtung 76a umfasst ein Haltegehäuse 77, in dem die Längsenden 73 des Zugorgans 68a mit einem Längenspiel aufgenommen sind. Die Längsenden 73 sind mit Anschlagkörpern 78 versehen, die Zugorgan-Anschläge 79 bereitstellen.

Die Zugorgan-Anschläge 79 schlagen an Antrieb-Anschlägen 80 an, die von dem Haltegehäuse 77 bereitgestellt werden. Beispielsweise durchdringt das Zugorgan 68a das Haltegehäuse 77 an dessen Stirnwänden, wo entsprechende Durchtrittsöffnungen angeordnet sind. Allerdings sind die Querschnitte dieser Öffnungen so klein bemessen, dass die Zugorgan-Anschläge 79 daran anschlagen können. Somit bilden also die Stirnwände des Haltegehäuses 77 die Antrieb-Anschläge 80.

Die Anschlagkörper 78 sind beispielsweise Zylinderkörper, die mit den jeweiligen Längsenden 73 des Zugorgans 68a fest verbunden sind.

Vorzugsweise sind die Längsenden 73 bzw. Anschlagkörper 78 vollständig in dem Haltegehäuse 77 aufgenommen. Dieses hat beispielsweise auch eine obere Wand 82 und Seitenwände.

Zwischen den Zugorgan-Anschlägen 79 und den Antrieb-Anschlägen 80 sind Federn 83 angeordnet. Eine jeweilige Feder 83 stützt sich am Außenumfang der Durchtrittsöffnungen 81 am Haltegehäuse 77 sowie an den Anschlagkörpern 78 ab. Wenn eine Zugkraft auf das Trum 69 oder 70 ausgeübt wird, wird der mit dem jeweiligen Trum 69 oder 70 verbundene Anschlagkörper 78 in Richtung der zugeordneten Stirnwand des Haltegehäuses 77 gezogen, wobei die Feder 83 komprimiert wird. Die andere Feder 83 hingegen, die an dem dabei unbelasteten bzw. vom Wickelkörper 63 abzuwickelnden Trum 70 oder 69 angeordnet ist, spannt das Trum 70 oder 69, indem es den an diesem Trum 70 oder 69 angeordneten Anschlagkörper 78 vom zugeordneten Antrieb-Anschlag 80 des Haltegehäuses 77 weg beaufschlagt.

Ein Antrieb 60b entspricht im Wesentlichen dem Antrieb 60a, wobei im Unterschied zum Antrieb 60a das Zugorgan 68b mit seinen Längsenden 73 am antriebsseitigen Wickelkörper 63 festgelegt ist, nämlich mittels Haltern 84.

Im Bereich des anderen Wickelkörpers 75 ist das Zugorgan 68b der Längenausgleichseinrichtung 76b quasi durchgehend. Jedenfalls erstreckt sich ein Abschnitt 90 des Zugorgans 68b zwischen Anschlagkörpern 78, die mit dem Zugorgan 68b fest verbunden sind. Zwischen den Anschlagkörpern 78 und den Stirnwänden des Haltegehäuses 77 bzw. den Antrieb-Anschlägen 80 sind wie bei der Längenausgleichseinrichtung 76a Federn 83 angeordnet.

Der Wickelkörper 75 bzw. der Antriebskörper 74 haben zweckmäßigerweise einen größeren Durchmesser als der beim Antrieb 60a oder 60b angeordnete Wickelkörper 63. Somit macht der Antriebskörper 74 bei einer Verstellung des Kupplungsarms 12 zwischen der Gebrauchsstellung G und der Nichtgebrauchsstellung N beispielsweise eine Drehung von etwa 180° durch, während sich der Wickelkörper 63 dabei mehrfach dreht. Der Wickelkörper 75 bzw. Antriebskörper 74 ist zweckmäßigerweise ringförmig oder hohlzylindrisch. Zweckmäßigerweise erstrecken sich am Außenumfang des Wickelkörpers 75 Führungsvorsprünge 85, beispielsweise flanschartige oder ringartige Vorsprünge, zwischen denen das Zugorgan 68a oder 68b geführt ist.

Eine Wickelfläche 86, die sich zwischen den Führungsvorsprüngen 85 erstreckt, kann beispielsweise im gute Gleiteigenschaft aufweisen, mit einer Gleitbeschichtung versehen sein oder dergleichen, so dass das von den Längenausgleichseinrichtungen 76a, 76b gespannte Zugorgan 68a, 68b leicht an den Wickelflächen 86 bzw. am Außenumfang der Wickelkörper 75 entlang gleiten kann.

Es versteht sich, dass ein Zugorgan auch auf andere Weise als bei den Längenausgleichseinrichtungen 76a oder 76b der Fall gespannt werden kann: beispielsweise könnte eine Torsionsfeder oder eine sonstige, einen Wickelkörper im Sinne eines Aufwickelns belastende Feder an oder in einem jeweiligen Wickelkörper oder bei dem jeweiligen Wickelkörper angeordnet sein. Vorzugsweise ist eine Torsionsfeder 87 vorgesehen, die den Wickelkörper 63 im Sinne eines Spannens des Zugorgans 68a beaufschlagt.

Weiterhin ist es möglich, dass für ein jeweiliges Trum eines Zugorgans jeweils ein separater Wickelkörper vorgesehen ist. Dann jedenfalls ist es auch leichter, beispielsweise mithilfe der Torsionsfeder 87 oder einer sonstigen, den Wickelkörper im Sinne eines Spannens des Zugorgans belastenden Feder, zu versehen.

Selbstverständlich kann auch durch eine bewegliche Lagerung und eine Feder Beaufschlagung einer Antriebseinheit ein Zugorgan gespannt werden. Beispielsweise könnte der Antrieb 60a mittels eines Lagers 88 schwenkbar an der Halterung 14 gelagert sein. Eine an einem Längsende des Schutzgehäuses 68 bzw. des Antriebs 60a angreifende Feder 89 beaufschlagt die Baueinheit des Antriebs 60a im Sinne eines Spannens des Zugorgans 68a.

## Patentansprüche

1. Anhängekupplung für ein Kraftfahrzeug (15), mit einem Kupplungsarm (12), an dessen freiem Ende ein Kupplungselement (26) zum Ankuppeln eines Anhängers angeordnet ist, das im am Kraftfahrzeug (15) montierten Zustand der Anhängekupplung (10) in einer Gebrauchsstellung (G) nach hinten vor das Kraftfahrzeug (15) vorsteht, und mit einem an dem Kraftfahrzeug (15) anordenbaren oder angeordneten Fahrzeughalter (11) zum Halten eines Kupplungsarms (12), wobei der Kupplungsarm (12) an dem Fahrzeughalter (11) lösbar befestigbar ist und/oder der Fahrzeughalter (11) ein Lager zum Verstellen des Kupplungsarms (12) zwischen der Gebrauchsstellung (G) und einer Nichtgebrauchsstellung (N) aufweist, in der der Kupplungsarm (12) zu dem Kraftfahrzeug (15) hinbewegt ist, insbesondere hinter einem Stoßfänger des Kraftfahrzeugs (15) angeordnet ist, mit einer Fixiereinrichtung (38) zum Fixieren des Kupplungsarms (12) an dem Fahrzeughalter (11) in der Gebrauchsstellung (G), und mit einem Antrieb (60a; 60b) zum Antreiben des Kupplungsarms (12) und/oder zum Antreiben der Fixiereinrichtung (38), wobei der Antrieb (60a; 60b) mindestens ein flexibles Zugorgan (68a; 68b) umfasst, wobei der Antrieb (60a; 60b) eine Längenausgleichseinrichtung (76a; 76b) mit einer Federanordnung aufweist, mit der ein Längenspiel des mindestens einen Zugorgans (68a; 68b) ausgleichbar ist, **dadurch gekennzeichnet, dass** mindestens eine Feder (83) der Federanordnung an einem Längsendbereich (73) des mindestens einen Zugorgans (68a; 68b) oder einem Anschlagbereich des mindestens einen Zugorgans (68a; 68b) angeordnet ist, mit dem das mindestens eine Zugorgan (68a; 68b) an einem Gegen-Anschlag anschlägt.

2. Anhängekupplung nach Anspruch 1, **dadurch gekennzeichnet, dass** die Längenausgleichseinrichtung (76a; 76b) einen dehnbaren Abschnitt des mindestens einen Zugorgans (68a; 68b) umfasst.

3. Anhängekupplung nach Anspruch 1 oder 2, **dadurch gekennzeichnet, dass** ein mit dem mindestens einen Zugorgan (68a; 68b) verbundener, um eine Drehachse (30) drehbarer Antriebskörper (74) längs und/oder quer zu der Drehachse (30) beweglich, insbesondere schwenkbar, ist.

4. Anhängekupplung nach einem der vorhergehenden Ansprüche, **dadurch gekennzeichnet, dass** die Längenausgleichseinrichtung (76a; 76b) mindestens einen mit dem mindestens einen Zugorgan (68a; 68b) fest verbundenen Zugorgan-Anschlag (79) und einen mit einem antreibenden oder angetriebenen Körper verbundenen Antrieb-Anschlag (80) umfasst, zu dem der Zugorgan-Anschlag (79) durch eine auf das mindestens eine Zugorgan (68a; 68b) wirkende Zugkraft hin bewegbar ist, wobei zwischen dem Zugorgan-Anschlag (79) und dem Antrieb-Anschlag (80) eine Feder (83) angeordnet ist, welche die Anschläge voneinander weg beaufschlagt.

5. Anhängekupplung nach Anspruch 4, **dadurch gekennzeichnet, dass** die Längenausgleichseinrichtung (76a; 76b) mindestens zwei Zugorgan-Anschläge (79) aufweist, zwischen denen sich ein Abschnitt des mindestens einen Zugorgans (68a; 68b) erstreckt, wobei die Zugorgan-Anschläge (79) zwischen Antrieb-Anschlägen (80) und zwischen mindestens einem Zugorgan-Anschlag (79) und dem ihm zugeordneten Antrieb-Anschlag (80) eine Feder (83) angeordnet sind.

6. Anhängekupplung nach einem der vorhergehenden Ansprüche, **dadurch gekennzeichnet, dass** der Antrieb (60a; 60b) einen Antriebsmotor (61) und/oder ein manuell zu betätigendes Handbetätigungselement umfasst und/oder dass der Antrieb (60a; 60b) eine Rückstell-Federanordnung (36) aufweist, die entgegen einer durch das mindestens eine Zugorgan (68a; 68b) ausübbaren Zugkraft wirkt.

7. Anhängekupplung nach einem der vorhergehenden Ansprüche, **dadurch gekennzeichnet, dass** der Antrieb (60a; 60b) mindestens einen Wickelkörper (63; 75) zum Aufwickeln des mindestens einen Zugorgans (68a; 68b) umfasst.

8. Anhängekupplung nach Anspruch 7, **dadurch gekennzeichnet, dass** der Antriebskörper (74) an mindestens einem der Wickelkörper (63; 75) angeordnet ist oder den Wickelkörper (63; 75) bildet und/oder dass der mindestens eine Wickelkörper (63; 75) durch die Federanordnung der Längenausgleichseinrichtung (76a; 76b) im Sinne eines Spannens des mindestens einen Zugorgans (68a; 68b) belastet ist und/oder dass die Federanordnung eine den Wickelkörper (63; 75) quer zu seiner Wickelachse oder Drehachse (30) belastende Feder (89) und/oder eine den Wickelkörper (63; 75) in Drehrichtung belastende Feder, insbesondere eine Torsionsfeder (87), umfasst.

9. Anhängekupplung nach einem der vorhergehenden Ansprüche, **dadurch gekennzeichnet, dass** mindestens ein mit dem mindestens einen Zugorgan (68a; 68b) verbundener Wickelkörper (63; 75) mit dem Kupplungsarm (12) fest verbunden ist, so dass der Wickelkörper (63 ; 75) eine Verstellbewegung des Kupplungsarms (12) zwischen der Gebrauchsstellung (G) und der Nichtgebrauchsstellung (N) zumindest teilweise mitmacht.

10. Anhängekupplung nach einem der vorhergehenden Ansprüche, **dadurch gekennzeichnet, dass** der Kupplungsarm (12) um eine erste Achse (30) zwischen der Gebrauchsstellung (G) und der Nichtgebrauchsstellung (N) schwenkbar und entlang der ersten Achse verschieblich (30) und/oder um mindestens eine zweite, zu der ersten Achse winkelige Achse (31, 32) verschwenkbar ist.

11. Anhängekupplung nach einem der vorhergehenden Ansprüche, **dadurch gekennzeichnet, dass** der Kupplungsarm (12) durch eine Zwangsführung (33) an dem Fahrzeughalter (11) geführt ist.

12. Anhängekupplung nach einem der vorhergehenden Ansprüche, **dadurch gekennzeichnet, dass** mindestens ein Wickelkörper (63; 75) mit dem Antriebsmotor (61) verbunden, insbesondere in einem gemeinsamen Schutzgehäuse (64) mit dem Antriebsmotor (61) angeordnet, ist.

13. Anhängekupplung nach einem der vorhergehenden Ansprüche, **dadurch gekennzeichnet, dass** das mindestens eine Zugorgan (68a; 68b) ein Seil, insbesondere ohne eine Schutzhülle oder Stützhülle, und/oder einen Bowdenzug und/oder einen Riemen, insbesondere einen Zahnriemen, umfasst.

14. Anhängekupplung nach einem der vorhergehenden Ansprüche, **dadurch gekennzeichnet, dass** der Antrieb (60a; 60b) mit dem mindestens einen Zugorgan (68a; 68b) zum Verstellen des Kupplungsarms (12) in die Gebrauchsstellung (G) und/oder die Nichtgebrauchsstellung (N) vorgesehen ist, und dass die Anhängekupplung (10) einen Stellantrieb (46) zum Verstellen der Fixiereinrichtung (38) in eine den Kupplungsarm (12) zu einer Verstellung gegenüber dem Fahrzeughalter (11) freigebenden Lösestellung und/oder in eine den Kupplungsarm (12) am Fahrzeughalter (11) fixierenden Fixierstellung aufweist, und dass sie eine insbesondere bei dem Stellantrieb (46) angeordnete Steuerung zum Ansteuern des Antriebs (60a; 60b) für den Kupplungsarm (12) in Abhängigkeit von einer jeweiligen Stellung der Fixiereinrichtung (38) aufweist.

## Claims

1. Trailer coupling for a motor vehicle (15), with a coupling arm (12) having at its free end a coupling element (26) for the coupling-on of a trailer and which, with the trailer coupling (10) fitted to the motor vehicle (15), extends in a position of use (G) rearwards beyond the motor vehicle (15), and with a vehicle holder (11) which is or may be mounted on the motor vehicle (15) for holding a coupling arm (12), wherein the coupling arm (12) may be fixed releasably to the vehicle holder (11) and/or the vehicle holder (11) has a bearing for shifting the coupling arm (12) between the position of use (G) and an inoperative position (N) in which the coupling arm (12) is moved towards the motor vehicle (15), in particular being located behind a bumper of the motor vehicle (15), with a fixing device (38) for fixing the coupling arm (12) to the vehicle holder (11) in the position of use (G), and with a drive (60a, 60b) for driving the coupling arm (12) and/or for driving the fixing device (38), wherein the drive (60a, 60b) includes at least one flexible tension organ (68a, 68b), wherein the drive (60a, 60b) has a length adjustment device (76a; 76b) with a spring assembly by which longitudinal play of the tension organ or organs (68a, 68b) may be adjusted, **characterised in that** at least one spring (83) of the spring assembly is located at a longitudinal end section (73) of the tension organ or organs (68a, 68b) or at a stop section of the tension organ or organs (68a, 68b) with which the tension organ or organs (68a, 68b) strikes or strike against a counter-stop.

2. Trailer coupling according to claim 1, **characterised in that** the length adjustment device (76a; 76b) includes a stretchable section of the tension organ or organs (68a, 68b).

3. Trailer coupling according to claim 1 or 2, **characterised in that** a driving body (74) connected to the tension organ or organs (68a, 68b) and rotatable around an axis of rotation (30) may be moved, in particular pivoted, along and/or across the axis of rotation (30).

4. Trailer coupling according to any of the preceding claims, **characterised in that** the length adjustment device (76a; 76b) includes at least one tension organ stop (79) permanently connected to the tension organ or organs (68a, 68b), and a drive-stop (80) connected to a driving or driven body, to which the tension organ stop (79) may be moved by a tensile force acting on the tension organ or organs (68a, 68b), wherein between the tension organ stop (79) and the drive-stop (80) there is provided a spring (83) which presses the stops away from one another.

5. Trailer coupling according to claim 4, **characterised in that** the length adjustment device (76a; 76b) has at least two tension organ stops (79) between which there extends a section of the tension organ or organs (68a, 68b), wherein the tension organ stops (79) are located between drive-stops (80) and a spring (83) is located between at least one tension organ stop (79) and its assigned drive-stop (80).

6. Trailer coupling according to any of the preceding claims, **characterised in that** the drive (60a, 60b) includes a driving motor (61) and/or a manual actuation element for manual operation and/or that the drive (60a, 60b) has a resetting spring assembly (36) which acts against a tensile force which may be exerted by the tension organ or organs (68a, 68b).

7. Trailer coupling according to any of the preceding claims, **characterised in that** the drive (60a, 60b) includes at least one winding body (63, 75) for winding up the tension organ or organs (68a, 68b).

8. Trailer coupling according to claim 7, **characterised in that** the driving body (74) is mounted on at least one of the winding bodies (63, 75) or forms the winding body (63, 75) and/or that the winding body or bodies (63, 75) is or are biased by the spring assembly of the length adjustment device (76a; 76b) for the purpose of tensioning the tension organ or organs (68a, 68b) and/or that the spring assembly includes a spring (89) biasing the winding body (63, 75) transversely to its winding axis or axis of rotation (30) and/or a spring, in particular a torsion spring (87), biasing the winding body (63, 75) in the direction of rotation.

9. Trailer coupling according to any of the preceding claims, **characterised in that** at least one winding body (63, 75) connected to the tension organ or organs (68a, 68b) is permanently connected to the coupling arm (12), so that the winding body (63, 75) at least partly accompanies an adjustment movement of the coupling arm (12) between the position of use (G) and the inoperative position (N).

10. Trailer coupling according to any of the preceding claims, **characterised in that** the coupling arm (12) may be pivoted around a first axis (30) between the position of use (G) and the inoperative position (N) and may slide along the first axis (30) and pivot around at least one second axis (31, 32) at an angle to the first axis.

11. Trailer coupling according to any of the preceding claims, **characterised in that** the coupling arm (12) is guided on the vehicle holder (11) by positive guidance means (33).

12. Trailer coupling according to any of the preceding claims, **characterised in that** at least one winding body (63, 75) is connected to the driving motor (61), in particular being mounted in a common protective casing (64) with the driving motor (61).

13. Trailer coupling according to any of the preceding claims, **characterised in that** the tension organ or organs (68a, 68b) include a rope, in particular without a protective sleeve or a support sleeve, and/or a control cable, and/or a belt, in particular a toothed belt.

14. Trailer coupling according to any of the preceding claims, **characterised in that** the drive (60a, 60b) is provided with the tension organ or organs (68a, 68b) for shifting the coupling arm (12) into the position of use (G) and/or the inoperative position (N), and that the trailer coupling (10) has an actuator (46) for shifting the fixing device (38) into a release position freeing the coupling arm (12) for movement relative to the vehicle holder (11) and/or into a locating position fixing the coupling arm (12) on the vehicle holder (11), and that it has a control unit, in particular mounted on the actuator (46), for controlling the drive (60a, 60b) for the coupling arm (12) on the basis of a particular position of the fixing device (38).

## Revendications

1. Attelage pour un véhicule automobile (15), avec un bras d'attelage (12), sur l'extrémité libre duquel un élément d'attelage (26) est agencé pour l'attelage d'une remorque, qui dépasse dans un état monté sur le véhicule automobile (15) de l'attelage (10) dans une position d'utilisation (G) vers l'arrière du véhicule automobile (15), et avec un support de véhicule (11) agencé ou pouvant être agencé sur le véhicule automobile (15) pour le maintien d'un bras d'attelage (12), dans lequel le bras d'attelage (12) peut être fixé de manière détachable sur le support de véhicule (11) et/ou le support de véhicule (11) présente un palier pour le réglage du bras d'attelage (12) entre la position d'utilisation (G) et une position de non utilisation (N), dans laquelle le bras d'attelage (12) est déplacé vers le véhicule automobile (15), en particulier est agencé derrière un pare-chocs du véhicule automobile (15), avec un dispositif de fixation (38) pour la fixation du bras d'attelage (12) sur le support de véhicule (11) dans la position d'utilisation (G), et avec un entraînement (60a ; 60b) pour l'entraînement du bras d'attelage (12) et/ou pour l'entraînement du dispositif de fixation (38), dans lequel l'entraînement (60a ; 60b) comporte au moins un organe de traction flexible (68a ; 68b), dans lequel l'entraînement (60a ; 60b) présente un dispositif de compensation de longueur (76a ; 76b) avec un agencement de ressort, avec lequel un jeu de longueur d'au moins un organe de traction (68a ; 68b) est compensable, **caractérisé en ce qu'**au moins un ressort (83) de l'agencement de ressort est agencé sur une zone d'extrémité longitudinale (73) d'au moins un organe de traction (68a ; 68b) ou une zone de butée d'au moins un organe de traction (68a ; 68b), avec lequel l'au moins un organe de traction (68a ; 68b) bute contre une butée antagoniste.

2. Attelage selon la revendication 1, **caractérisé en ce que** le dispositif de compensation de longueur (76a ; 76b) comporte une section extensible d'au moins un organe de traction (68a ; 68b).

3. Attelage selon la revendication 1 ou 2, **caractérisé en ce qu'**un corps d'entraînement (74) relié à l'au moins un organe de traction (68a ; 68b), rotatif autour d'un axe de rotation (30) est mobile longitudinalement et/ou transversalement à l'axe de rotation (30), en particulier pivotant.

4. Attelage selon l'une des revendications précédentes, **caractérisé en ce que** le dispositif de compensation de longueur (76a ; 76b) comporte au moins une butée d'organe de traction (79) reliée fixement à l'au moins un organe de traction (68a ; 68b) et une butée d'entraînement (80) reliée à un corps entraînant ou entraîné, vers laquelle la butée d'organe de traction (79) est mobile par une force de traction agissant sur l'au moins un organe de traction (68a ; 68b), dans lequel un ressort (83) est agencé entre la butée d'organe de traction (79) et la butée d'entraînement (80), lequel sollicite les butées loin l'une de l'autre.

5. Attelage selon la revendication 4, **caractérisé en ce que** le dispositif de compensation de longueur (76a ; 76b) présente au moins deux butées d'organe de traction (79), entre lesquelles une section d'au moins un organe de traction (68a ; 68b) s'étend, dans lequel les butées d'organe de traction (79) sont agencées entre des butées d'entraînement (80) et un ressort (83) entre au moins une butée d'organe de traction (79) et la butée d'entraînement (80) qui lui est associée.

6. Attelage selon l'une des revendications précédentes, **caractérisé en ce que** l'entraînement (60a; 60b) comporte un moteur d'entraînement (61) et/ou un élément d'actionnement manuel à actionner manuellement et/ou **en ce que** l'entraînement (60a ; 60b) présente un agencement de ressort de rappel (36) qui agit dans le sens inverse à une force de traction pouvant être exercée par l'au moins un organe de traction (68a ; 68b).

7. Attelage selon l'une des revendications précédentes, **caractérisé en ce que** l'entraînement (60a ; 60b) comporte au moins un corps d'enroulement (63 ; 75) pour l'enroulement d'au moins un organe de traction (68a ; 68b).

8. Attelage selon la revendication 7, **caractérisé en ce que** le corps d'entraînement (74) est agencé sur au moins un des corps d'enroulement (63 ; 75) ou forme le corps d'enroulement (63 ; 75) et/ou **en ce que** l'au moins un corps d'enroulement (63 ; 75) est chargé par l'agencement de ressort du dispositif de compensation de longueur (76a ; 76b) au sens d'un serrage d'au moins un organe de traction (68a ; 68b) et/ou **en ce que** l'agencement de ressort comporte un ressort (89) chargeant le corps d'enroulement (63 ; 75) transversalement à son axe d'enroulement ou axe de rotation (30) et/ou un ressort chargeant dans le sens de rotation le corps d'enroulement (63 ; 75), en particulier un ressort de torsion (87).

9. Attelage selon l'une des revendications précédentes, **caractérisé en ce qu'**au moins un corps d'enroulement (63 ; 75) relié à l'au moins un organe de traction (68a ; 68b) est relié fixement au bras d'attelage (12) de sorte que le corps d'enroulement (63 ; 75) participe au moins partiellement à un mouvement de réglage du bras d'attelage (12) entre la position d'utilisation (G) et la position de non utilisation (N).

10. Attelage selon l'une des revendications précédentes, **caractérisé en ce que** le bras d'attelage (12) est pivotant autour d'un premier axe (30) entre la position d'utilisation (G) et la position de non utilisation (N) et est mobile le long du premier axe (30) et/ou est pivotant autour d'au moins un second axe (31, 32) angulaire au premier axe.

11. Attelage selon l'une des revendications précédentes, **caractérisé en ce que** le bras d'attelage (12) est guidé par un guidage à force (33) sur le support de véhicule (11).

12. Attelage selon l'une des revendications précédentes, **caractérisé en ce qu'**au moins un corps d'enroulement (63 ; 75) est relié au moteur d'entraînement (61), en particulier est agencé dans un boîtier de protection (64) commun avec le moteur d'entraînement (61).

13. Attelage selon l'une des revendications précédentes, **caractérisé en ce que** l'au moins un organe de traction (68a ; 68b) comporte un câble, en particulier sans enveloppe de protection ou enveloppe d'appui et/ou un câble Bowden et/ou une courroie, en particulier une courroie dentée.

14. Attelage selon l'une des revendications précédentes, **caractérisé en ce que** l'entraînement (60a ; 60b) est prévu avec l'au moins un organe de traction (68a ; 68b) pour le réglage du bras d'attelage (12) dans la position d'utilisation (G) et/ou la position de non utilisation (N), et **en ce que** l'attelage (10) présente un entraînement de réglage (46) pour le réglage du dispositif de fixation (38) dans une position de détachement libérant le bras d'attelage (12) pour un réglage par rapport au support de véhicule (11) et/ou dans une position de fixation fixant le bras d'attelage (12) sur le support de véhicule (11), et **en ce qu'**il présente une commande agencée en particulier pour l'entraînement de réglage (46) pour la commande de l'entraînement (60a ; 60b) pour le bras d'attelage (12) en fonction d'une position respective du dispositif de fixation (38).
